# EUROPEAN PATENT APPLICATION

(11) **EP 1 118 639 A2**
(43) Date of publication of application: **25.07.2001**
(21) Application number: 01300134.2
(22) Date of filing: 08.01.2001
(51) Int. Cl.: C08L 53/02, C08L 25/08

(54) **Syndiotactic polystyrene copolymer resin composition having macromonomer for improving impact strength**

(30) Priority: 20.01.2000 KR 2000002614; 26.08.2000 KR 2000049833
(71) Applicant: SAMSUNG ELECTRONICS CO., LTD., Suwon-City, Kyungki-do 442-742 (KR)
(72) Inventor: Park, Joon Yong, Saejong Apartment 109-1104, Daejun-Shi 305-390 (KR)
(74) Representative: Kyle, Diana

(57) **Abstract**

Disclosed is a syndiotactic polystyrene copolymer resin composition with high impact strength, which comprises: (A) 1-99 weight % of a syndiotactic polystyrene copolymer which is polymerized from at least one macromonomer having an active polymerization group at its end and at least one styrene monomer; and (B) correspondingly 99-1 weight % of at least one rubber phase resin and/or at least one thermoplastic resin. Optionally, the (B) component further comprises at least one polar group-containing rubber phase resin and/or at least one rubber phase resin of a core/shell structure in which a core moiety is of a rubber phase, being coated with a shell moiety polymerized from styrene monomers or styrene-containing vinyl monomers. The macromonomer with a terminal polymerization-active group makes the polystyrene resin compatible with rubber phase resins and thermoplastic resins, thereby bringing about a great improvement in the impact strength of the polystyrene resin composition. Also, the macromonomer itself makes a contribution to the improvement in the impact strength of the polystyrene resin.

## Description

The present invention relates, in general, to a resin composition comprising a syndiotactic polystyrene copolymer and, more particularly, to a syndiotactic polystyrene copolymer resin composition with high impact strength, in which a macromonomer is introduced into a syndiotactic polystyrene copolymer, making the polystyrene copolymer compatible with rubber phase resins.

At present, polystyrene resins are extensively produced with a commercial value afforded by virtue of their excellent physical properties, including transparency, thermal stability and processability. However, polystyrene resins are limited by their being of low impact strength irrespective of stereoregularity.

To be improved in impact strength, polystyrene resins with atactic structures, of which the commercial manufacture takes advantage of radical polymerization, are usually prepared by copolymerization of styrene monomers and rubber phase monomers (e.g., high impact polystyrene (HIPS) resin, acrylonitrile-butadiene-styrene (ABS) resin, etc.) or by blending polystyrene resins with rubber phase polymers. In addition to being superior in impact strength, the atactic polystyrene resins obtained by these techniques show excellent electrical insulating properties so that they find numerous applications in the molding article, film, electronic part, and packaging material manufacturing industries. However, these atactic polystyrene resins suffer from the problem of being poor in thermal stability and chemical resistance.

As for syndiotactic polystyrene resins, which have recently been extensively commercialized, they are far superior in thermal stability, electrical properties and chemical resistance. Despite these excellent physical properties, syndiotactic polystyrene resins are restrained from being applied for the injection molding industry because of their poor impact strength. To solve this problem, syndiotactic polystyrene resins are usually blended with rubber phase resins and/or other thermoplastic resins. However, this blending method has been restrictively developed because syndiotactic polystyrene resins and copolymers consisting of units having substituted phenyl rings have high melting points and are devoid of compatibility with rubber phase resins and/or other thermoplastic resins.

To circumvent the drawbacks conventional syndiotactic polystyrene resins have, the present inventors suggested the introduction of macromonomers which have active polymerization groups at their ends into syndiotactic polystyrene resins and made an application for patents (Korean Pat. Appl'n Nos. 99-33723 and 99-48607) in which the macromonomers and styrene derivatives are copolymerized to give syndiotactic polystyrene-based co- or ter-polymers which are good in fluidity, impact strength and compatibility with other resins while retaining characteristic physical properties of polystyrene. However, there remains a need for further improvement in their impact strength.

### SUMMARY OF THE INVENTION

Therefore, it is an object of the present invention to provide excellent impact strength for a polystyrene-based resin composition.

Based on the present invention, the above object could be accomplished by a provision of a syndiotactic polystyrene copolymer resin composition with high impact strength, comprising: (A) 1-99 weight % of a syndiotactic polystyrene copolymer which is polymerized from at least one macromonomer having an active polymerization group at its end and at least one styrene monomer; and (B) correspondingly 99-1 weight % of at least one rubber phase resin and/or at least one thermoplastic resin.

Optionally, the (B) component further comprises at least one polar group-containing rubber phase resin and/or at least one rubber phase resin of a core/shell structure in which a core moiety is of a rubber phase, being coated with a shell moiety polymerized from styrene monomers or styrene-containing vinyl monomers.

### DETAILED DESCRIPTION OF THE INVENTION

The present invention is directed to a polystyrene resin composition which has far superior impact strength while retaining the characteristic physical properties of polystyrene. The polystyrene resin composition is based on (A) a syndiotactic polystyrene copolymer which is polymerized from at least one macromonomer having an active polymerization group at its end, e. g., a terminal vinyl group, and at least one styrene monomer. Into this base resin, (B) at least one rubber phase resin and/or at least one thermoplastic resin is blended.

Of the (B) component, the rubber phase resin(s) and the thermoplastic resin(s) may be added, separately or together, to the polystyrene resin composition of the present invention. The (B) component may further comprise at least one rubber phase resin containing a polar group and/or at least one rubber phase resin of a core/shell structure in which a core moiety is of a rubber phase, being coated with a shell moiety polymerized from styrene monomers or styrene-containing vinyl monomers.

The polystyrene resin composition comprises the (A) component at an amount of 1-99 wt% and the (B) component at a corresponding amount of 1-99 wt%. Preferably, the polystyrene resin composition comprises 5-95 wt% of the (A) component and correspondingly 95-5 wt% of the (B) component.

The components can be blended with each other in a melt mixing process or a solution mixing process with the aid of a mixer, such as a Haake mixer, a Henschel mixer, a Banbury mixer, a single-screw extruder, or a twin-screw extruder.

In order to perform specific functions, additives, such as nucleating agents and anti-oxidants, may be added to the polystyrene resin composition of the present invention.

Following are details of the components used in the present invention.

### (A) Syndiotactic polystyrene copolymer from one or more macromonomers having active polymerization vinyl groups at their ends and one or more styrene monomers

Useful in the present invention is a polystyrene copolymer which can be prepared by copolymerizing a styrene monomer represented by the following chemical formula 1 and a macromonomer represented by the following chemical formula 2 in the presence of a catalyst composed of a transition metal compound and alkyl aluminoxane. 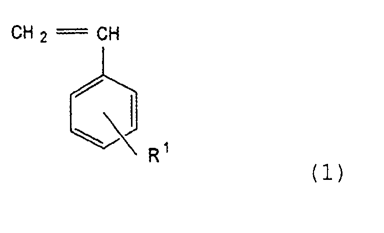 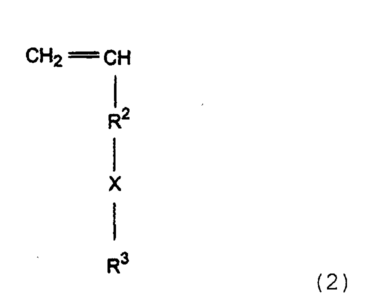 wherein,
R¹ is a hydrogen atom, a halogen atom or an alkyl group containing 1-20 carbon atoms;
R² is a saturated hydrocarbon containing 1-20 carbon atoms, an aromatic alkyl or a cycloalkyl;
R³ is a saturated hydrocarbon containing 1-20 carbon atoms; and
X is a polymer of ion-polymerizable monomers

Suitable polystyrene copolymers in the present invention may be synthesized from commercially available styrene monomers. Examples of the styrene monomers include styrene, halogenostyrenes, such as o-, m-, and p-chlorostyrene, bromostyrene, and fluorostyrene, alkyl styrenes such as ethyl styrene, propylstyrene, butyl styrene, and tert-butylstyrene, alkoxy styrenes, and styrene carboxylate.

Serving as a comonomer to synthesize the syndiotactic polystyrene copolymer, the macromonomer has a backbone which is obtained by polymerizing ion-polymerizable monomers with the help of an ion initiator. At its end, the macromonomer is provided with a vinyl group, through which the macromonomer can be polymerized, by the reaction of the backbone with an unsaturated halide.

As recognized in the chemical formula 2, a variety of macromonomers can be obtained, depending on the repeating unit, represented by X, which results from the polymerization of ion-polymerizable monomers. Suitable as the ion-polymerizable monomers are the conjugated monomers represented by the following chemical formulas 3a to 3k: 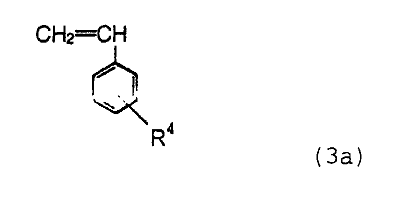 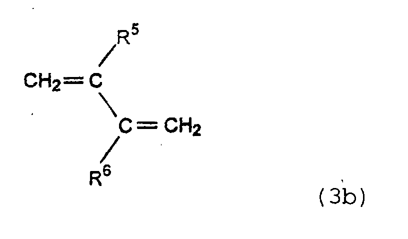 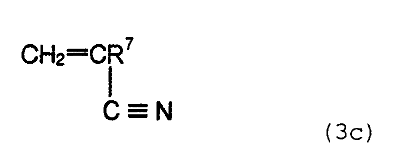 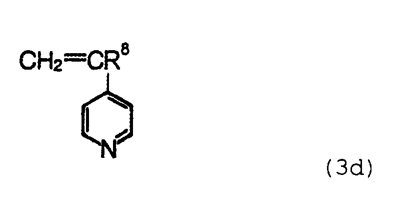 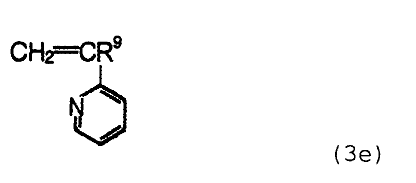 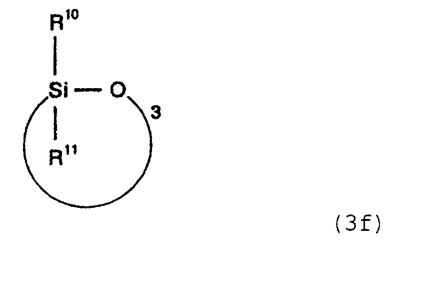 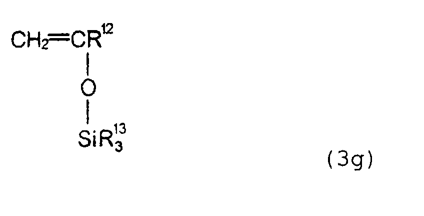 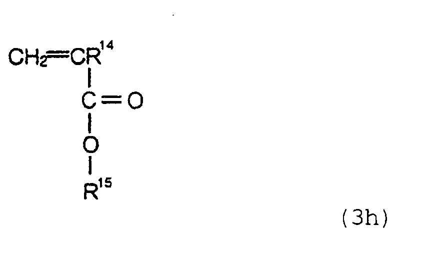 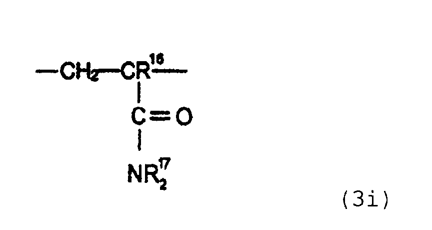 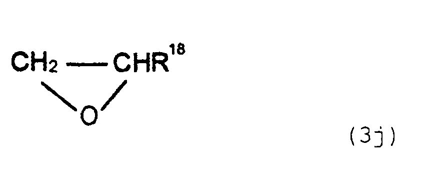 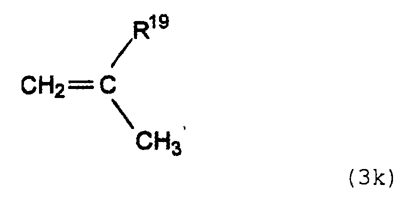 wherein,
R⁴, R⁵, R⁶, R⁷, R⁸, and R⁹, which are the same or different, each is a hydrogen atom, a halogen atom or an alkyl containing 1-20 carbon atoms;
R¹⁰, R¹¹, R¹², R¹³, R¹⁶, and R¹⁷, which are the same or different, each is an alkyl containing 1-20 carbon atoms;
R¹⁴ and R¹⁵, which are the same or different, each is a hydrogen atom or an alkyl containing 1-20 carbon atoms;
R¹⁸ is a hydrogen atom or an alkyl containing 1-20 carbon atoms; and
R¹⁹ is an alkyl containing 1-4 carbon atoms.

Representative examples of the conjugated monomers which are ion-polymerizable include olefins such as isobutylene and isopentene; dienes such as 1,3-butadiene, 2-fluoro-1,3-butadiene, and 2,3-dichloro-1,3-butadiene; styrene; halogenostyrenes, such as o-, m- and p-chlorostyrene, bromostyrene, and fluorostyrene; alkylstyrenes, such as o-, m- and p-methylstyrene, ethylstyrene, propylstyrene, butylstyrene, and tert-butylstyrene; acrylonitrile; alkylene oxides, such as ethylene oxide and propylene oxide; hexamethylcyclo trisiloxane; vinylsiloxane; vinyl acetates; methacrylates; methacrylic acids; methacryl amides; and vinylpyridines, such as 2-vinylpyridine and 4-vinylpyridine. Two or more of these ion-polymerizable monomers may be used in combination.

Effective to initiate the polymerization of the conjugated monomers are alkali metal, such as cesium, rubidium, potassium, sodium, and lithium, and alkali metal compounds, such as n-butyl lithium, sec-butyl lithium, tert-butyl lithium, lithium diisopropylamide, octyl potassium, lithium trimethylsilanoate, and butyl magnesium bromide.

In terms of stereoregularity, the polystyrene copolymer used in the present invention is of a syndiotactic structure. Usually, the tacticity of a compound is quantitatively measured by ¹³C-NMR and represented by the amount of the same structural units which are in a consecutive sequence, such as diads, triads, pentads, etc. The polystyrene copolymer of the present invention was found to have a tacticity of at least 85 % diads or at least 50 % pentads as measured by ¹³C-NMR.

To be useful in the polystyrene copolymer of the present invention, the macromonomer should have an overall polymerization degree of 10-10,000. With a macromonomer content of 0.1-50 wt%, the syndiotactic polystyrene copolymer resin is 150-272 °C in melting point and ranges from 50,000 to 2,000,000 in weight average molecular weight as measured by gel penetration chromatography (GPC).

### (B-1) Rubber phase resin

No limitations are imposed on the rubber phase resin(s) which constitutes the resin composition of the present invention, along with the syndiotactic polystyrene resin containing the macromonomer and optionally other resins. Depending on the purposes of the resin composition of the present invention, various kinds of rubber phase resins, styrene-containing rubber phase resins, and/or derivatives thereof may be selected.

Concrete examples of the rubber phase resins available in the present invention include natural rubber, natural rubber derivatives, acrylonitrile-butadiene-styrene (ABS) resins, high impact polystyrene (HIPS) resins, polybutadiene, polyisoprene, neoprene, hydrogen-substituted styrene/butadiene/styrene block copolymers (SEBS), styrene/isoprene/styrene block copolymers (SIS), hydrogen-substituted styrene/isoprene/styrene block copolymers (SEPS), ethylene/propylene rubber (EPM), ethylene/propylene/diene rubber (EPDM), polybutadiene derivatives, polyisoprene derivatives, neoprene derivatives, styrene/isoprene/styrene block copolymer (SIS) derivatives, hydrogen-substituted styrene/butadiene/styrene block copolymer (SEBS) derivatives, ethylene/propylene rubber (EPM) derivatives, and ethylene/propylene/diene rubber (EPDM) derivatives.

### (B-2) Thermoplastic resin

The thermoplastic resins which are useful in the syndiotactic polystyrene resin composition of the present invention can be selected from commonly used ones and is not limited to specific ones. The selection of the thermoplastic resin is dependent on the purpose of the syndiotactic polystyrene resin composition. It should be noted that the syndiotactic polystyrene copolymer containing the macromonomer is excluded from the scope of the thermoplastic resin used in the syndiotactic polystyrene resin.

Concrete examples of the thermoplastic resins available in the present invention include polyesters; polycarbonates; polyethers; polyamides; polyoxymethylenes; polyphenylene oxides; condensed polymers such as macromolecular liquid crystal polymers and derivatives thereof; acrylic polymers, such as poly(acrylic acid), poly(acrylic acid ester) and poly(methylmethacrylate), and derivatives thereof; polyolefins, such as polyethylene, polypropylene, polybutene, poly(3-methylpent-1-ene) and copolymers of ethylene and proplylene and derivatives thereof; polyvinylhalides, such as poly(vinyl chloride), poly(vinylidene chloride) and poly(vinylidene fluoride), and derivatives thereof; and ionomers in which resin side chains are substituted by ions in part or wholly.

If polyphenylene ether is selected as the thermoplastic resin, it is preferably selected from the group consisting of poly(2,3-dimethyl-6-ethyl-1,4-phenylene ether), poly(2-methyl-6-chloromethyl-1,4-phenylene), poly(2-methyl-6-hydroxyethyl-1,4-phenylene ether), poly(2-methyl-6-n-butyl-1,4-phenylene ether), poly(2-methyl-6-propyl-1,4-phenylene ether), poly(2,3,6-trimethyl-1,4-phenylene ether), poly[2-(4'-methylphenyl)-1,4-phenylene ether], poly(2-bromo-6-phenyl-1,4-phenylene ether), poly(2-methyl-6-phenyl-1,4-phenylene ether), poly(2-phenyl-1,4-phenylene ether), poly(2-chloro-1,4-phenylene ether), poly(2-methyl-1,4-phenylene. ether), poly(2-chloro-6-methyl-1,4-phenylene ether), poly(2-methyl-6-ethyl-1,4-phenylene ether), poly(2, 6-dibromo-1,4-phenylene ether), poly(2,6-dichloro-1,4-phenylene ether), poly(2,6-diethyl-1,4-phenylene ether), poly(2,6-dimethyl-1,4-phenylene ether) and mixtures thereof.

Optionally, the syndiotactic polystyrene resin composition of the present invention may further comprise one or more polar group-containing rubber phase resins and/or one or more core/shell rubber phase resins in which a core moiety is of a rubber phase, being coated with a shell moiety polymerized from styrene monomers or styrene-containing vinyl monomers.

### (B-3) Polar group-containing rubber phase resin

The term "a polar group-containing rubber phase resin" as used herein means a rubber phase resin whose backbone or side chain is grafted with a polar group. No limitations are imposed on the polar group. Examples of the polar groups useful in the present invention include acid halides, carbonyl groups, acid anhydrides, acid amides, carbonic acid ester, acid azides, sulfone groups, nitrile groups, cyano groups, isocyanic acid ester groups, amino groups, hydroxyl groups, imide groups, thiol groups, oxazoline groups and epoxy groups with a preference for maleic anhydride groups and epoxy groups. The polar group is preferably present in an amount of 0.01% by weight based on the weight of the resin.

### (B-4) Rubber phase resin of core/shell structure with a core moiety being of a rubber phase coated with a shell moiety polymerized from styrene monomers or styrene-containing vinyl monomers

The rubber phase resin of a core/shell structure has a rubber phase core moiety coated with a shell moiety polymerized or copolymerized from styrene monomers or one or more species of styrene-containing vinyl monomers. Without being limited by any limitations, the core/shell rubber phase resin is selected from various species, depending on the purpose of the syndiotactic polystyrene resin composition of the present invention. By way of examples, and not limitation, the core moiety, which is of a rubber phase, is composed of butadiene or its derivatives, isoprene or its derivatives, styrene or its derivatives, silicone or its derivatives, or mixtures thereof. No limitation is imposed on the shell moiety, which, by way of example, is polymerized from one or more vinyl monomers, such as styrene, (meth)acrylaonitrile, and (meth)acrylic ester co-monomer. These core/shell impact strength reinforcements are well known in the art and are commercially available.

A better understanding of the present invention may be obtained in light of the following examples which are set forth to illustrate, but are not to be construed to limit the present invention.

### PREPARATION EXAMPLE 1

### Preparation of Macromonomer

In a 100 ml glass reactor dried in a nitrogen atmosphere was added 500 ml of toluene which was then maintained at -78 °C. To the chilled solvent, 0.001 mole of tert-butyl lithium was added, followed by the slow introduction of 1 mol of isoprene. After 12 hours of reaction, 1 mole of a styrene monomer was slowly added to the reaction with the temperature remaining at -78 °C. After another 12 hours of reaction, the solution was slowly added with 0.0015 moles of 3-chloro-1-propene and a reaction therebetween was allowed to progress at -78 °C for 4 hours. After completion of the reaction, an excess of methanol was added to precipitate the polymer thus formed, and the precipitate was dried in vacuo to give an isoprene-styrene block macromonomer. Yield 80 %. In the isoprene-styrene block macromonomer, a polymerization degree of approximately 1,000 was found in both the styrene block and the isoprene block as measured by NMR analysis.

### PREPARATION EXAMPLE 2

### Preparation of Macromonomer-Containing Polystyrene Copolymer

A 10 L SUS reactor equipped with a mechanical stirrer was dried in vacuo at 70 °C for 2 hours and then, purged with nitrogen gas. To the reactor was added 2 liters of a solution of 50 g of the isoprene-styrene block macromonomer obtained in Preparation Example 1 in styrene, followed by the addition of 40 ml of tert-butyl styrene. After being added with 0.12 moles of triisobutylaluminum, the solution was stirred at 200 rpm for 15 min. Pre-polymerization was allowed to occur at 70 °C in the presence of the catalyst (Cp*Ti)₂(OC₆H₄C (CH₃)₂C₆H₄O)₃ which was added at an amount of 150 µmol as calculated for Ti after the dropwise addition of 30 mmol of modified aluminoxane, which served as a cocatalyst. In regard to the pre-polymerization, the reaction was stirred at 400 rpm for one hour. Again, 30 mmol of the modified alminoxane and then, 150 µmol of the catalyst (Cp*Ti)₂(OC₆H₄C(CH₃)₂C₆H₄O)₃ were added to carry out the polymerization in earnest for one hour with stirring. After completion of the polymerization, an excess of methanol was added to precipitate the product which was then washed with methanol and dried to give the title copolymer: 914 g. The copolymer was found to have a weight average molecular weight of 530,000 and a melting point of 254 °C. The undissolved content was 92 wt% as extracted with methylethyl ketone. ¹³C-NMR analysis showed that the copolymer had an isoprene-styrene macromonomer content of 5.17 wt% and a tert-butyl styrene content of 1.69 mole%.

### COMPARATIVE PREPARATION EXAMPLE 1

### Preparation of Syndiotactic Polystyrene Monopolymer Without Macromonomer

The same procedure as in Preparation Example 2 was repeated except that the isoprene-styrene block macromonomer and the tert-butyl styrene were not used. As a result of the polymerization of styrene monomers alone, 1,211 g of a polystyrene monopolymer was obtained with a weight average molecular weight of 430,000 and a melting point of 273 °C. The undissolved content was 97 wt% as extracted with methylethyl ketone.

### COMPARATIVE PREPARATION EXAMPLE 2

### Preparation of Syndiotactic Polystyrene Monopolymer Without Macromonomer

The same procedure as in Preparation Example 2 was repeated except that the isoprene-styrene block macromonomer was not used. As a result of the copolymerization of styrene/tert-butyl styrene (sPS/t-BuSt), 1,052 g of a polystyrene monopolymer was obtained with a weight average molecular weight of 480,000 and a melting point of 251 °C. The undissolved content was 96 wt% as extracted with methylethyl ketone. In the copolymer, the tert-butyl styrene was found to be present in a content of 1.95 mole% as measured by ¹³C-NMR.

### EXAMPLE 1

### Preparation of Syndiotactic Polystyrene Copolymer Resin Composition

To 100 weight parts of a composition composed of 70 weight parts of the polystyrene copolymer (Ter 100) obtained in Preparation Example 2 and 30 weight parts of SEBS (hydrogen-substituted styrene/isoprene/styrene block copolymer), such as that manufactured by Shell, identified as "G1651", there were added 0.3 weight parts of bis(2,6-di-tert-butyl-4-methylphenyl)pentaerythritol-diphosphite (commercially available from Adeca Agus, under the brand name of "Mark PEP-36") and 0.3 weight parts of tetrakis [methylene-3- (3,5-di-tert-butyl-4-hydroxyphenyl) propionate]methane/tris(2,4-di-tert-butylphenyl)phosphite (commercially available from Ciba-Geigy under the brand name of Irganox B225), both acting as antioxidants, and 0.3 weight parts of (para-tert-butyl)aluminum benzoate (commercially available from Dainippon Ink & Chemical under the brand name of PTBBA-A1) as a nucleating agent. The resulting powder composition was mixed at room temperature and then, melt-mixed at 280 °C for 5 min with the aid of a Hakke mixer to give a resin composition. Using a mini-molder, test specimens were produced from the resin composition, and tested for impact strength according to ASTM D256. The results are given in Table 1, below.

### COMPARATIVE EXAMPLES 1 AND 2

Specimens were prepared in a manner similar to that of Example 1, except that, instead of the polystyrene copolymer (Ter 1000) obtained in Preparation Example 2, syndiotactic polystyrenes (sPS) obtained in Comparative Preparation Example 1 and 2 were used respectively. Impact strength test results are given in Table 1, below.

### EXAMPLES 2 TO 4

### Preparation of Polystyrene Resin Compositions

The same procedure as in Example 1 was repeated, except that the resin composition in the blend was changed as indicated in Table 1, below. The results are given in Table 1, below.

### COMPARATIVE EXAMPLE 3

Specimens were prepared in a manner similar to that of Example 3, except that, instead of the polystyrene copolymer (Ter 1000) obtained in Preparation Example 2, syndiotactic polystyrene (sPS) obtained in Comparative Preparation Example 1 was used. Impact strength test results are given in Table 1, below.

**TABLE 1**

| Example Nos. | Styrene Derivatives (wt. part) | SEBS (wt. part) | Impact Strength (kg.cm/cm) |
|---|---|---|---|
| EXAMPLE 1 | Ter 1000 , 70 | 30 | 33.46 |
| C. EXAMPLE 1 | SPS, 70 | 30 | 16.26 |
| C. EXAMPLE 2 | sPS/t-BiSt, 70 | 30 | 20.04 |
| EXAMPLE 2 | Ter 1000 , 90 | 20 | 14.91 |
| EXAMPLE 3 | Ter 1000 , 90 | 10 | 6.28 |
| C. EXAMPLE 3 | SPS, 90 | 10 | 2.66 |
| EXAMPLE 4 | Ter 1000 , 95 | 5 | 3.25 |

### EXAMPLE 5

To 100 weight parts of a composition composed of 80 weight parts of the polystyrene copolymer (Ter 100) obtained in Preparation Example 2, 15 weight parts of SEBS (hydrogen-substituted styrene/isoprene/styrene block copolymer), such as that manufactured by Shell, identified as "G1651", and 5 weight parts of polyphenylene oxide, such as that manufactured by Asahi Chemical, identified as "P401", there were added 0.3 weight parts of bis(2,6-di-tert-butyl-4-methylphenyl)pentaerythritol-diphosphite (commercially available from Adeca Agus, under the brand name of "Mark PEP-36") and 0.3 weight parts of tetrakis[methylene-3-(3,5-di-tert-butyl-4-hydroxyphenyl)propionate]methane/tris (2,4-di-tert-butylphenyl)phosphite (commercially available from Ciba-Geigy under the brand name of Irganox B225), both acting as antioxidants, and 0.3 weight parts of (para-tert-butyl)aluminum benzoate (commercially available from Dainippon Ink & Chemical under the brand name of PTBBA-A1) as a nucleating agent. The resulting powder composition was mixed at room temperature and then, melt-mixed at 280 °C for 5 min with the aid of a Hakke mixer to give a resin composition. Using a mini-molder, test specimens were produced from the resin composition, and tested for impact strength according to ASTM D256. The results are given in Table 2, below.

### COMPARATIVE EXAMPLE 4

Specimens were prepared in a manner similar to that of Example 5, except that, instead of the polystyrene copolymer (Ter 1000) obtained in Preparation Example 2, syndiotactic polystyrene (sPS) obtained in Comparative Preparation Example 1 was used. Impact strength test results are given in Table 2, below.

### EXAMPLE 6

The same procedure as in Example 1 was repeated, except that the resin composition in the blend was changed to comprise 75 weight parts of the polystyrene copolymer (Ter 1000), 20 weight parts of SEBS (commercially available from Shell under the brand name of G1615), and 5 weight parts of polyphenylene oxide (commercially available from Asahi Chemical under the brand name of P401) as indicated in Table 2, below. The results are given in Table 2, below.

### COMPARATIVE EXAMPLE 5

Specimens were prepared in a manner similar to that of Example 6, except that, instead of the polystyrene copolymer (Ter 1000) obtained in Preparation Example 2, syndiotactic polystyrenes (sPS) obtained in Comparative Preparation Example 1 was used. Impact strength test results are given in Table 2, below.

### EXAMPLES 7 TO 16

The same procedure as in Example 5 was repeated, except that the resin composition in the blend was changed as indicated in Table 2, below. The results are given in Table 2, below.

**TABLE 2**

| Example Nos. | Styrene Deriv. (wt. part) | SEBS (wt. part) | PPO (wt. part) | Impact Strength (kg.cm/cm) |
|---|---|---|---|---|
| Example 5 | Ter 1000, 80 | 15 | 5 | 18.49 |
| C. Example 4 | SPS , 80 | 15 | 5 | 9.06 |
| Example 6 | Ter 1000, 75 | 20 | 5 | 25.95 |
| C. Example 5 | SPS, 75 | 20 | 5 | 11.88 |
| Example 7 | Ter 1000, 72.5 | 17.5 | 10 | 30.34 |
| Example 8 | Ter 1000, 71 | 24.8 | 4.2 | 26.01 |
| Example 9 | Ter 1000, 70 | 21.7 | 8.3 | 26.59 |
| Example 10 | Ter 1000, 65 | 25 | 10 | 38.03 |
| Example 11 | Ter 1000, 76.2 | 21.3 | 2.5 | 19.63 |
| Example 12 | Ter 1000, 85 | 12.5 | 2.5 | 11.73 |
| Example 13 | Ter 1000, 76.7 | 15 | 8.3 | 21.59 |
| Example 14 | Ter 1000, 80 | 10 | 10 | 12.59 |
| Example 15 | Ter 1000, 67.5 | 30 | 2.5 | 31.76 |
| Example 16 | Ter 1000, 79.8 | 16 | 4.2 | 15.83 |

### EXAMPLE 17

To 100 weight parts of a composition composed of 60 weight parts of the polystyrene copolymer (Ter 100) obtained in Preparation Example 2, 21.3 weight parts of SEBS (commercially available form Shell under the brand name of G1651), 10 weight parts of polar group-containing SEBS (commercially available from Asahi Chemical under the brand name of M1913), 2.5 weight parts of a core/shell rubber phase resin (commercially available from Mitsubishi Rayon under the brand name of Metablen S2001), and 6.2 weight parts of polyphenylene oxide (commercially available from Asahi Chemical under the brand name of P401), there were added 0.3 weight parts of bis(2,6-di-tert-butyl-4-methylphenyl)pentaerythritol-diphosphite (commercially available from Adeca Agus, under the brand name of "Mark PEP-36") and 0.3 weight parts of tetrakis[methylene-3-(3,5-di-tert-butyl-4-hydroxyphenyl)propionate]methane/tris (2,4-di-tert-butylphenyl)phosphite (commercially available from Ciba-Geigy under the brand name of Irganox B225), both acting as antioxidants, and 0.3 weight parts of (para-tert-butyl)aluminum benzoate (commercially available from Dainippon Ink & Chemical under the brand name of PTBBA-A1) as a nucleating agent. The resulting powder composition was mixed at room temperature and then, melt-mixed at 280 °C for 5 min with the aid of a Hakke mixer to give a resin composition. Using a mini-molder, test specimens were produced from the resin composition, and tested for impact strength according to ASTM D256. The results are given in Table 3, below.

### COMPARATIVE EXAMPLES 6 AND 7

Specimens were prepared in a manner similar to that of Example 17, except that, instead of the polystyrene copolymer (Ter 1000) obtained in Preparation Example 2, the syndiotactic polystyrene (sPS) obtained in Comparative Preparation Example 1 and the syndiotactic polystyrene/tert-butyl styrene obtained in Comparative Preparation Example 2 were used, respectively. Impact strength test results are given in Table 3, below.

**TABLE 3**

| Example. | Composition (wt. part) | | | | | Impact Strength |
|---|---|---|---|---|---|---|
| Nos. | Styrene Deriv. | SEBS | Polar SEBS | Core/Shell Rubber Phase Resin | PPO | (kg.cm/cm) |
| Exmp.17 | Ter 1000,60 | 21.3 | 10 | 2.5 | 6.2 | 68.7 |
| C. Exmp.6 | sPS,60 | 21.3 | 10 | 2.5 | 6.2 | 40.9 |
| C. Exmp.7 | sPS/t-BuSt,60 | 21.3 | 10 | 2.5 | 6.2 | 56.7 |

### EXAMPLES 18 TO 36

The same procedure as in Example 17 was repeated, except that the resin composition in the blend was changed as indicated in Table 4, below. The results are given in Table 4, below.

**TABLE 4**

| Composition (wt. part) | | | | | | |
|---|---|---|---|---|---|---|
| Exmp. Nos. | Styrene Deriv. | SEBS | Polar SEBS | Core/shell Rubber Phase Resin | PPO | Impact Strength (kg.cm/cm) |
| 18 | Ter 1000,60 | 10 | 10 | 10 | 10 | 27.5 |
| 19 | Ter 1000,60 | 30 | 5 | 2.5 | 2.5 | 54.4 |
| 20 | Ter 1000,60 | 25 | 2.5 | 2.5 | 10 | 54.7 |
| 21 | Ter 1000,60 | 17.5 | 2.5 | 10 | 10 | 31.4 |
| 22 | Ter 1000,60 | 17.5 | 10 | 10 | 2.5 | 34.4 |
| 23 | Ter 1000,60 | 25 | 2.5 | 10 | 2.5 | 35.1 |
| 24 | Ter 1000,60 | 17.5 | 6.2 | 6.2 | 10 | 43.1 |
| 25 | Ter 1000,60 | 13.8 | 10 | 2.5 | 10 | 46.7 |
| 26 | Ter 1000,60 | 24.1 | 4 | 4 | 4 | 39.2 |
| 27 | Ter 1000,60 | 17.5 | 10 | 2.5 | 2.5 | 44.4 |
| 28 | Ter 1000,60 | 17.5 | 2.5 | 2.5 | 10 | 35.2 |
| 29 | Ter 1000,60 | 10 | 6.2 | 10 | 6.2 | 21.6 |
| 30 | Ter 1000,60 | 17.5 | 2.5 | 10 | 2.5 | 26.1 |
| 31 | Ter 1000,60 | 10 | 6.2 | 2.5 | 10 | 28.7 |
| 32 | Ter 1000,60 | 10 | 2.5 | 6.2 | 10 | 15.7 |
| 33 | Ter 1000,60 | 20 | 2.5 | 2.5 | 2.5 | 31 |
| 34 | Ter 1000,60 | 10 | 10 | 2.5 | 2.5 | 22.6 |
| 35 | Ter 1000,60 | 10 | 2.5 | 10 | 2.5 | 17 |
| 36 | Ter 1000,60 | 10 | 2.5 | 2.5 | 2.5 | 17 |

Taken together, the data of the above examples and comparative examples demonstrate that the macromonomer-containing polystyrene resin compositions according to the present invention are much more improved in impact strength than are corresponding comparative resin compositions, which are devoid of the macromonomer. It is believed that the macromonomer with a terminal polymerization-active group makes the polystyrene resin compatible with rubber phase resins and thermoplastic resins, thereby bringing about a great improvement in the impact strength of the polystyrene resin composition. Also, the macromonomer itself makes a contribution to the improvement in the impact strength of the polystyrene resin.

The present invention has been described in an illustrative manner, and it is to be understood that the terminology used is intended to be in the nature of description rather than of limitation. Many modifications and variations of the present invention are possible in light of the above teachings. Therefore, it is to be understood that within the scope of the appended claims, the invention may be practiced otherwise than as specifically described.

## Claims

1. A syndiotactic polystyrene copolymer resin composition with high impact strength, comprising:
(A) 1-99 weight % of a syndiotactic polystyrene copolymer which is polymerized from at least one macromonomer having an active polymerization group at its end and at least one styrene monomer; and
(B) correspondingly 99-1 weight % of at least one rubber phase resin and/or at least one thermoplastic resin.

2. The syndiotactic polystyrene copolymer resin composition according to claim 1, wherein component (B) further comprises at least one polar group-containing rubber phase resin and/or at least one rubber phase resin of a core/shell structure in which a core moiety is of a rubber phase, being coated with a shell moiety polymerized from styrene monomers or styrene-containing vinyl monomers.

3. The syndiotactic polystyrene copolymer resin composition according to claim 1 or 2, wherein the macromonomer has a structure represented by the following chemical formula 2: 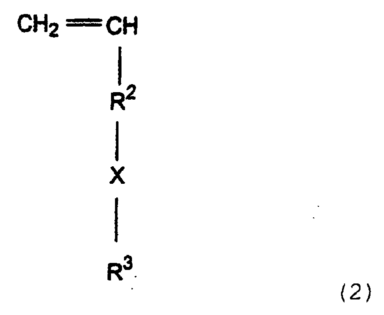 wherein R² is a saturated hydrocarbon containing 1-20 carbon atoms, an aromatic alkyl or a cycloalkyl ; R³ is a saturated hydrocarbon containing 1-20 carbon atoms ; and X is a polymer of at least one monomer which is selected from ion-polymerizable monomers represented by the following chemical formulae 3a to 3k: 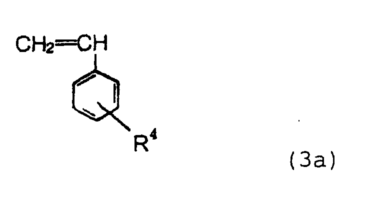 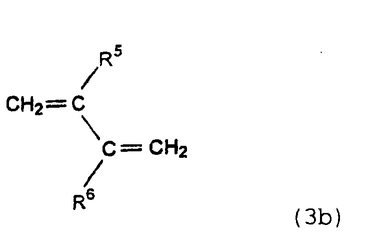 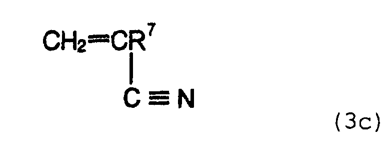 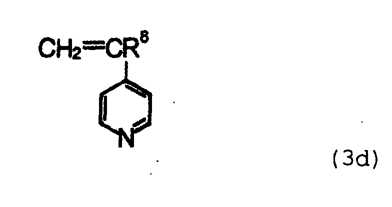 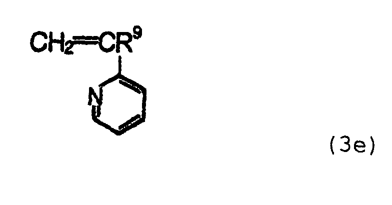 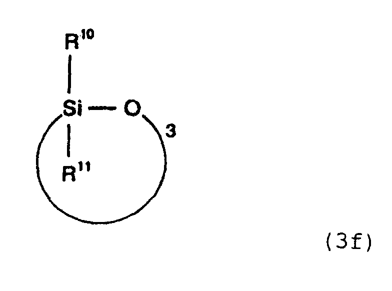 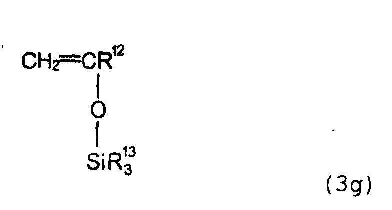 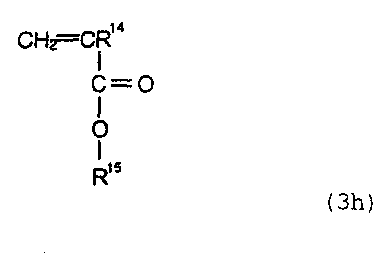 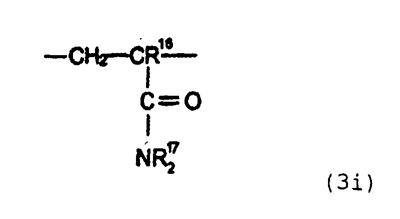 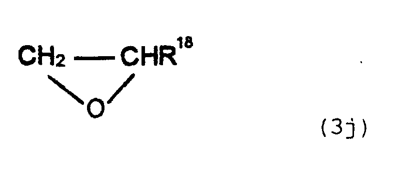 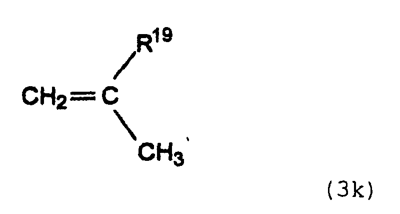 wherein,
R⁴, R⁵, R⁶, R⁷, R⁸, and R⁹, which are the same or different, each represents a hydrogen atom, a halogen atom or an alkyl group containing 1-20 carbon atoms;
R¹⁰, R¹¹, R¹², R¹³, R¹⁶, and R¹⁷, which are the same or different, each represents an alkyl group containing 1-20 carbon atoms;
R¹⁴ and R¹⁵, which are the same or different, each represents a hydrogen atom or an alkyl group containing 1-20 carbon atoms;
R¹⁸ represents a hydrogen atom or an alkyl group containing 1-20 carbon atoms; and
R¹⁹ is an alkyl group containing 1-4 carbon atoms.

4. The syndiotactic polystyrene copolymer resin composition according to any of claims 1 to 3, wherein the polystyrene copolymer has a tacticity of at least 85 % diads or at least 50 % pentads as measure by ¹³C-NMR.

5. The syndiotactic polystyrene copolymer resin composition according to any of claims 1 to 4, wherein the syndiotactic polystyrene copolymer ranges, in weight average molecular weight, from 50,000 to 2,000,000.

6. The syndiotactic polystyrene copolymer resin composition according to any of claims 1 to 5, wherein the styrene monomer is selected from styrene, alkyl styrene, halogenostyrene, alkoxy styrene, styrene carboxylate, and combinations thereof.

7. The syndiotactic polystyreme copolymer resin composition according to any of claims 1 to 6, wherein the macromonomer is contained at an amount of 0.1-50 weight % in the syndiotactic polystyrene copolymer.

8. The syndiotactic polystyrene copolymer resin composition according to any of claims 1 to 7, wherein the macromonomer has a polymerization degree of 10-10,000 in the syndiotactic polystyrene copolymer.

9. The syndiotactic polystyrene copolymer resin composition according to any of claims 1 to 8, wherein the rubber phase resin is selected from natural rubber, natural rubber derivatives, acrylonitrile-butadiene-styrene (ABS) resins, high impact polystyrene (HIPS) resins, polybutadiene, polyisoprene, neoprene, hydrogen-substituted styrene/butadiene/styrene block copolymers (SEBS), styrene/isoprene/styrene block copolymers (SIS), hydrogen-substituted styrene/isoprene/styrene block copolymers (SEPS), ethylene/propylene rubber (EPM), ethylene/propylene/diene rubber (EPDM), polybutadiene derivatives, polyisoprene derivatives, neoprene derivatives, styrene/isoprene/styrene block copolymer (SIS) derivatives, hydrogen-substituted styrene/butadiene/styrene block copolymer (SEBS) derivatives, ethylene/propylene rubber (EPM) derivatives, and ethylene/propylene/diene rubber (EPDM) derivatives.

10. The syndiotactic polystyrene copolymer resin composition as set forth in claim 2, wherein the polar group-containing rubber phase resin is a resin selected from natural rubber, natural rubber derivatives, acrylonitrile-butadiene-styrene (ABS) resins, high impact polystyrene (HIPS) resins, polybutadiene, polyisoprene, neoprene, hydrogen-substituted styrene/butadiene/styrene block copolymers (SEBS), styrene/isoprene/styrene block copolymers (SIS), hydrogen-substituted styrene/isoprene/styrene block copolymers (SEPS), ethylene/propylene rubber (EPM), ethylene/propylene/diene rubber (EPDM), polybutadiene derivatives, polyisoprene derivatives, neoprene derivatives, SIS derivatives, SEBS derivatives, EPM derivatives, and EPDM derivatives, which is partially substituted with a polar group selected from acid halides, carbonyl groups, acid anhydrides, acid amides, carbonic acid esters, acid azides, sulfone groups, nitrile groups, cyano groups, isocyanic acid ester groups, amino groups, hydroxyl groups, imide groups, thiol groups, oxazoline groups and epoxy groups.

11. The syndiotactic polystyrene copolymer resin composition according to any of claims 2 to 10, wherein the core moiety is composed of one selected from butadiene and its derivatives, isoprene and its derivatives, styrene and its derivatives, silicone and its derivatives, and mixtures thereof and the shell moiety is composed of at least one vinyl monomer.

12. The syndiotactic polystyrene copolymer resin composition according to any of claims 1 to 11, wherein the thermoplastic resin is selected from polyesters; polycarbonates; polyethers; polyamides; polyoxymethylenes; polyphenylene oxides; macromolecular liquid crystal polymers and derivatives thereof; poly(acrylic acid), poly(acrylic acid ester) and poly(methylmethacrylate), and derivatives thereof; polyethylene, polypropylene, polybutene, poly (3-methylpent-1-ene) and copolymers of ethylene and propylene and derivatives thereof; poly(vinyl chloride), poly(vinylidene chloride) and poly(vinylidene fluoride), and derivatives thereof; and ionomers whose side chains are substituted partly or totally by ions

13. The syndiotactic polystyrene copolymer resin composition according to any of claims 1 to 12 wherein component (A) is present at an amount of 5-95 wt% and component (B) is present at a corresponding amount of 95-5 wt%.
